# DEMANDE DE BREVET EUROPEEN

(11) **EP 2 371 696 A1**
(43) Date de publication de la demande: **05.10.2011**
(21) Numéro de dépôt: 11159793.6
(22) Date de dépôt: 25.03.2011
(51) Int. Cl.: B62K 21/10

(54) **Ensemble de direction pour deux-roues**

(30) Priorité: 01.04.2010 FR 1052488
(71) Demandeur: MATRA MANUFACTURING & SERVICES, 75016 Paris (FR)
(72) Inventeur: Duvivier, Michael, 92320, Chatillon (FR)
(74) Mandataire: Cabinet Plasseraud

(57) **Abrégé**

Ensemble de direction pour un deux-roues comprenant un cadre (2), un guidon et une fourche portant une roue directrice. L'ensemble de direction comprend un tube de direction (12) solitaire du cadre et définissant un axe de pivotement (X), une tige de direction (14) montée pivotante à travers le tube de direction et reliée d'une part au guidon et d'autre part à la fourche.

Un dispositif de génération de couple comprend un organe élastiquement déformable (32) agencé dans un espace intérieur à l'ensemble de direction et entourant la tige de direction (14). L'organe élastique présentant une première portion (33) qui coopère avec le tube (12) et une deuxième portion (34) qui coopère avec la tige (14), de manière à créer un couple de rappel lorsque la tige de direction (14) pivote d'au moins un angle déterminé par rapport à une position angulaire neutre correspondant a une circulation en ligne droite.

## Description

L'invention se rapporte à une direction de deux-roues, notamment de vélo ou bicyclette, qui permet de créer un couple de rappel vers la position neutre de la direction.

Plus particulièrement, il s'agit d'un ensemble de direction pour un deux-roues comprenant un cadre, un guidon et une fourche portant une roue directrice, qui comprend :
- un tube de direction solitaire du cadre et définissant un axe de pivotement ;
- une tige de direction montée pivotante à travers le tube de direction et reliée d'une part au guidon et d'autre part à la fourche ; et
- un dispositif susceptible de générer un couple de rappel vers une position angulaire neutre correspondant a une circulation en ligne droite.

Il est connu de prévoir un dispositif de rappel élastique pour des véhicules à deux-roues, qu'il s'agisse de bicyclettes, vélos ou motos, dans le but de réaligner la roue directrice avec la position neutre de la direction qui permet de circuler en ligne droite. Ceci dans le but de faciliter au maximum le retour à cette position par l'utilisateur, voire de conserver cette position neutre de la direction lorsque l'utilisateur lâche les mains du guidon.

Les systèmes connus sont le plus souvent réalisés à l'aide d'un organe élastique de type ressort, présentant une extrémité fixée au cadre et une autre extrémité fixée à la fourche. Il s'agit donc de systèmes apparents, qui outre un caractère peu esthétique, peuvent être endommagés. La stabilité du deux-roues peut alors être détériorée en générant un couple vers une position décalée par rapport à la position neutre.

D'autre part, les systèmes de rappel en position neutre existants s'avèrent peu appropriés pour résoudre de manière satisfaisante un autre problème constaté par les inventeurs. Ce problème survient lorsque la direction du deux-roues arrive de manière relativement brusque dans l'une des positions de braquage maximale, soit parce que la direction elle-même comprend des butées limitant l'amplitude angulaire de la direction, soit parce qu'un élément mobile avec la fourche vient en butée contre le cadre. Cette venue en butée est bien entendu désagréable pour un utilisateur et peut endommager légèrement les parties venant en contact. Ce phénomène de butée peut aussi entraîner la chute du vélo lorsque l'utilisateur descendu du vélo, le met en appui sur une béquille sans s'assurer que la direction est stabilisée. Ce phénomène s'accentue lorsque le vélo comprend un panier avant mobile avec la fourche qui contient une charge, ou encore si la béquille est conçue de telle manière que la roue avant perd le contact avec le sol lorsque le vélo est mis sur la béquille.

La présente invention a pour but de réaliser un ensemble de direction amélioré permettant en particulier d'éviter que la venue en butée angulaire de la direction ne génère un choc excessif, et en fournissant autant que possible un dispositif fiable et esthétique.

A cet effet, la présente invention a pour objet un ensemble de direction pour deux-roues du type précité, dans lequel le dispositif de génération de couple comprend un organe élastiquement déformable agencé dans un espace intérieur audit ensemble de direction et entourant la tige de direction, ledit organe élastique présentant une première portion qui coopère avec le tube de direction et une deuxième portion qui coopère avec la tige de direction, de manière à créer un couple de rappel autour de l'axe de pivotement lorsque la tige de direction pivote d'au moins un angle déterminé par rapport à ladite position angulaire neutre correspondant a une circulation en ligne droite, et dans lequel l'espace intérieur contenant l'organe élastiquement déformable n'excède pas la section maximale du tube de direction.

Le fait que l'organe élastiquement déformable soit logé dans un espace intérieur, rend celui-ci invisible et le protège de la plupart des risques d'endommagement. Le fait que cet espace intérieur entoure la tige, et non pas le tube de direction, favorise la compacité du dispositif.

Mais, de plus, cette situation dans un espace relativement clos, permet de limiter l'amplitude des déformations que subit cet organe élastique, notamment en adoptant certaines des dispositions préférentielles détaillées ci-après. Il est ainsi possible de générer un couple de rappel important lorsque la direction approche les angles de braquage maximum, tout en limitant les risques de déformation permanente de l'organe élastique.

Dans des modes de réalisation préférés, on peut avoir recours en outre, à l'une ou l'autre des dispositions suivantes.

L'organe élastiquement déformable est essentiellement en élastomère ; ce matériau, outre un coût raisonnable, présente des caractéristiques de résistance, en particulier à la compression, non linéaires qui permettent d'augmenter fortement le couple de rappel à l'approche des angles de braquage maximum. De plus le montage d'un organe en élastomère s'avère facile, notamment du fait qu'il n'est pas nécessairement précontraint ou accroché lors de sa mise en place. Les élastomères ont aussi l'avantage de présenter une gamme de raideur étendue qui permet d'ajuster le couple de rappel en fonction de l'utilisation, sans modifier la forme de l'organe élastique.

L'organe élastiquement déformable est déformé principalement selon une direction circonférentielle par rapport à l'axe de pivotement ; c'est-à-dire selon une direction correspondant au couple généré, ce qui permet un meilleur contrôle du couple de rappel et s'avère avantageux pour la compacité du dispositif.

L'espace intérieur est délimité longitudinalement par une paroi annulaire inférieure et une paroi annulaire supérieure immobilisées longitudinalement sur l'axe de pivotement à proximité de l'organe élastiquement déformable ; ainsi les déformations longitudinales peuvent être limitées.

L'espace intérieur est délimité radialement vers l'extérieur par une jupe s'étendant longitudinalement à proximité de l'organe élastiquement déformable sur une hauteur au moins égale à la hauteur dudit espace intérieur ; ainsi cette jupe permet de protéger l'organe élastique mais aussi de limiter ses déformations.

Les première et deuxième portions de liaison de l'organe élastiquement déformable sont diamétralement opposées ; ceci permet une parfaite symétrie du dispositif et donc des couples de rappel identiques en cas de braquage à droite ou à gauche.

L'une des portions de l'organe élastiquement déformable coopère avec un organe de butée qui est monté de manière réglable sur l'un desdits tube de direction et tige de direction. Ainsi, il est possible de précontraindre l'organe élastique pour augmenter le couple de rappel, en particulier à proximité de la position angulaire neutre. Cette disposition est aussi particulièrement utile dans le cas d'un élastomère pour éviter l'apparition d'un jeu dû au tassement de ce type de matériau après une série de compression.

L'organe élastiquement déformable se présente sous forme d'une bague ayant des faces longitudinales globalement planes avec des premier et deuxième reliefs au niveau des première et deuxième portions de liaison, et un premier et un deuxième organes de butée de forme complémentaire auxdits reliefs sont respectivement solidaires du tube et de la tige de direction ; la forme complémentaire des premier et deuxième organes transmet tout déplacement angulaire par rapport à la position neutre et ainsi le dispositif de génération de couple remplit une fonction de retour à la position neutre en plus de sa fonction d'amortissement des chocs en butée de braquage.

L'organe élastiquement déformable comprend au moins deux éléments élastiques distincts globalement en forme d'arc de cercle et présentant de préférence une section médiane agrandie venant en contact avec des parois de l'espace intérieur ; ce qui permet de les retenir par friction dans cet espace.

Le couple de rappel généré par l'organe élastiquement déformable, est d'au moins 5 N/m pour un écart angulaire inférieur à 15 degrés par rapport à l'angle de braquage maximal ; ceci afin d'amortir de manière très sensible l'arrivée en position de butée.

Le couple de rappel croît de manière supérieure à une loi directement proportionnelle en fonction de l'écart angulaire de la tige de direction par rapport à la position neutre de la direction ; ceci permet de favoriser l'amortissement pour les angles de braquage importants en affectant très peu la sensation de conduite du deux-roues.

Le couple de rappel généré par l'organe élastiquement déformable est inférieur à 2 N/m pour un écart angulaire de 20 degrés par rapport à la position neutre ; ainsi la conduite du deux-roues dans les conditions les plus courantes de circulation n'est quasiment pas affectée et ne demande aucune phase d'adaptation.

D'autres caractéristiques et avantages ressortiront de la description qui va suivre, donnée à titre d'exemple non limitatif d'un mode de réalisation préférentiel, en regard des figures dans lesquelles :
- la figure 1 est une vue partielle d'un vélo comprenant un ensemble de direction selon l'invention ;
- la figure 2 est une vue en coupe longitudinale de l'ensemble de direction de la figure 1 ;
- la figure 3 est une vue éclatée partielle de l'ensemble de direction de la figure 1 ; et
- la figure 4 est une vue arrachée de dessous d'une alternative de réalisation.

Sur les mêmes figures, des références identiques désignent des éléments identiques ou similaires.

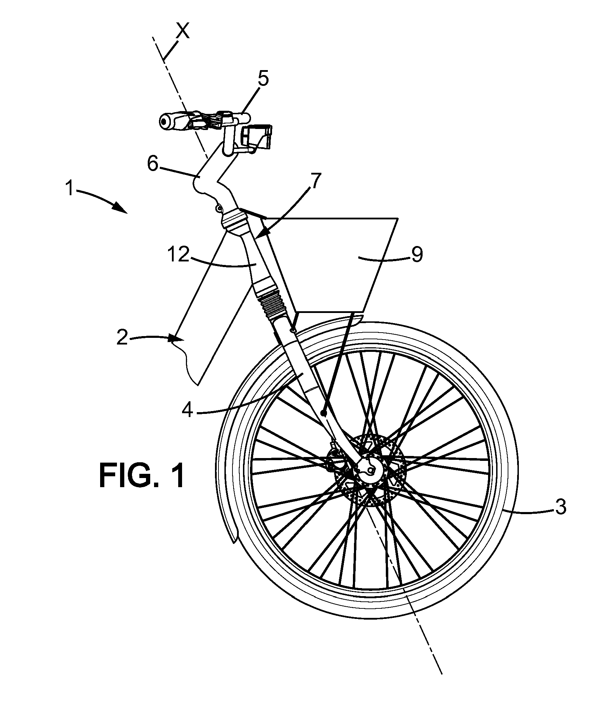

A la figure 1, est représentée la partie avant d'un vélo 1 comprenant un cadre 2, une roue avant 3 portée par une fourche 4 et un guidon 5 porté par une potence 6. Il s'agit d'un deux-roues de type vélo ou bicyclette comprenant éventuellement une assistance électrique au pédalage. On comprendra toutefois de la suite de la description qu'il pourrait s'agir d'un autre type de deux-roues comme par exemple un scooter ou une moto légère.

Un ensemble de direction 7 assure le guidage en pivotement de la roue 3, la fourche 4, la potence 6 et le guidon 5 autour d'un axe X appelé axe de pivotement. Pour des raisons bien connues de la stabilité, l'axe de pivotement X est légèrement incliné par rapport à la verticale. Dans certaines conditions d'utilisation, cette inclinaison peut néanmoins avoir pour inconvénient que la direction du deux-roues bascule par gravité vers un angle de braquage maximal droite ou gauche. Ce phénomène survient du fait du décalage du centre de gravité de la roue 3 par rapport à l'axe de pivotement X, par exemple lorsque la roue directrice 3 ne touche plus le sol quand le vélo 1 est placé sur béquille. Ce phénomène est amplifié du fait de la présence d'une charge excentrée par rapport à l'axe de pivotement X. Ceci est notamment le cas quand des bagages sont placés dans un panier 9, représenté à titre d'illustration, qui est mobile avec la fourche 4 et la potence 6.

Le basculement par gravité de la direction entraîne un à-coup plus ou moins important. D'autres causes au cours de l'utilisation peuvent causer cette venue en butée de la direction qui, outre un caractère désagréable, peut être dommageable au vélo, voire entraîner la chute de celui-ci.

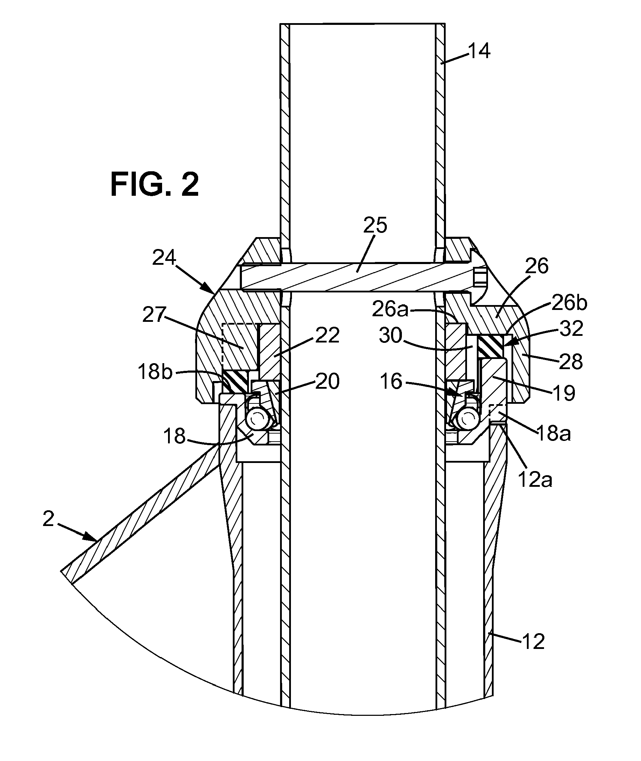

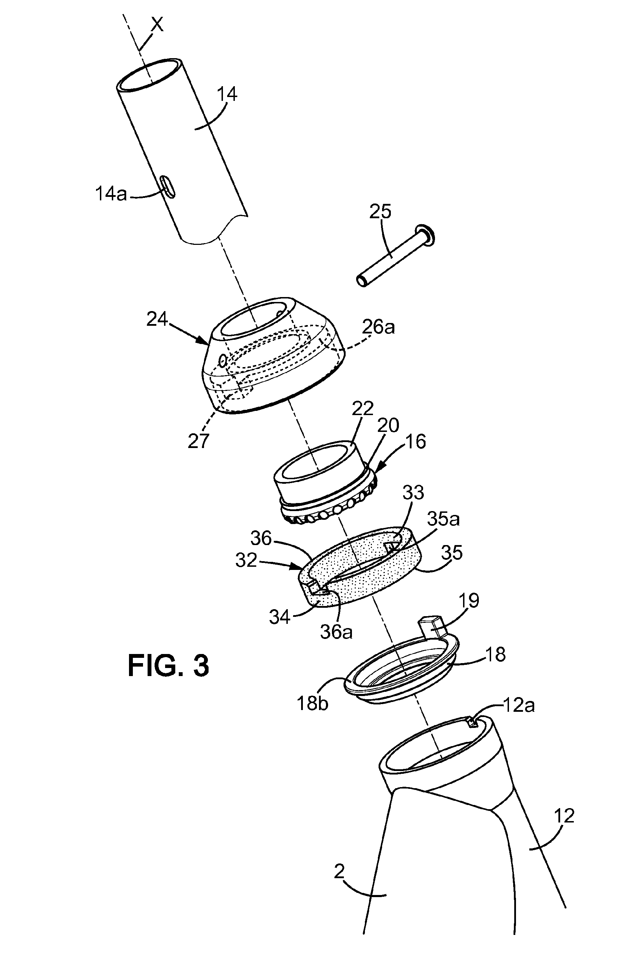

L'ensemble de direction 7 permet de pallier en outre ce problème. Comme cela apparaîtra mieux aux figures 2 et 3, l'ensemble des directions 7 comprend un tube de direction 12, aussi appelé tube vertical, qui est solidaire du cadre 2 et orienté selon l'axe de pivotement X puisqu'il définit cet axe. Par le terme "tube", il faut comprendre qu'il s'agit d'un corps creux quelque peu allongé, en une ou plusieurs parties. Mais cela n'implique en aucun cas qu'il doit représenter une surface extérieure ou intérieure cylindrique ou régulière.

L'ensemble de direction 7 comprend une tige de direction 14 qui traverse le tube de direction 12 et pivote dans celui-ci autour de l'axe X. Le terme "tige" n'implique pas qu'il s'agisse d'un corps plein, ou en une pièce. Il peut s'agir d'un corps tubulaire comme dans le mode de réalisation représenté, et la surface extérieure n'est pas nécessairement cylindrique ou régulière. Dans le mode de réalisation représenté, la tige de direction 14, dont seule la partie supérieure est représentée à la figure 3, est solidaire de la fourche 4, comme cela est usuel. Mais il n'est pas exclu que la tige de direction 14 soit un prolongement de la potence 6.

Le pivotement précis avec un faible effort de la tige de direction 14 dans le tube de direction 12 est assuré de manière bien connue par un roulement à billes supérieur 16, visible aux figures 2 et 3, et un roulement à billes inférieur non représenté. Ces roulements à billes forment des paliers de pivotement qui ménagent un espace radial entre la paroi extérieure de la tige de direction 14 et la paroi intérieure du tube de direction 12.

Les billes du roulement supérieur 16 circulent sur une piste formée sur une cuvette percée 18 reposant sur le tube de direction 14, et plus précisément sur le pourtour intérieur de celle-ci. Dans le mode de réalisation représenté, la cuvette 18 est une pièce distincte du tube de direction 12 et repose simplement sur celui-ci, mais elle pourrait être solidarisée avec le tube 12, par exemple par soudage.

On notera que la cuvette 18 est immobilisée en rotation par rapport au tube 12 par la coopération d'un relief saillant 18a de la cuvette, visible à la figure 2, avec une échancrure complémentaire 12a formée à l'extrémité supérieure du tube 12, comme cela est mieux visible à la figure 3.

La cuvette 18 constitue une paroi annulaire inférieure 18 entourant la tige 14 et immobilisée longitudinalement. Le pourtour extérieur de la paroi inférieure 18 forme une portion de surface circulaire plane 18b en dehors d'un organe 19 et est orientée vers le haut.

L'organe de butée qui se présente sous forme d'un plot relativement carré s'étendant vers le haut à partir de la portion de surface 18b. Ce premier organe de butée 19 pourrait prendre d'autres formes, voire une forme en creux, du moment qu'il est immobilisé en rotation par rapport au tube de direction 12.

La cage du roulement à billes 16 est bloquée sur la tige de direction 14 par une bague tronconique 20. Une entretoise 22 vient en appui sur la bague tronconique 20 et éventuellement la cage du roulement à billes 16.

Un chapeau 24 repose sur l'entretoise 22. Le chapeau 24 est immobilisé longitudinalement et en rotation par rapport à la tige de direction 14, ou encore en réalisant le chapeau 24 en une pièce avec la potence 6. Dans le mode de réalisation représenté, cette immobilisation est assurée par une vis 25 traversant des ouvertures 14a de la tige et exerçant une action de serrage du chapeau 24 sur la tige de direction 14.

D'autres systèmes d'immobilisation sont bien entendu possibles, comme par exemple un système d'écrous et de contre-écrous vissés sur la tige 14. D'autre part, le chapeau 24 peut prendre une forme sensiblement différente. Pour le mode de réalisation représenté, il est important que le chapeau 24 présente une paroi annulaire 26, dite supérieure, qui s'étend globalement de manière radiale depuis la tige 14. La paroi annulaire supérieure 26 présente une première surface circulaire 26a venant en appui contre l'entretoise 22, bloquant ainsi tout mouvement vers le bas de la tige de direction 14. Le coulissement vers le haut de la tige de direction 14 est bloqué de manière bien connue au niveau de la partie inférieure du tube de direction 12, notamment par le roulement inférieur.

La paroi annulaire supérieure 26 présente une deuxième portion de surface circulaire plane 26b orientée vers le bas qui est située essentiellement en regard de la paroi de surface 18b de la paroi inférieure 18.

La paroi annulaire supérieure 26 présente un deuxième organe de butée 27 solidaire de celle-ci, et par conséquent immobilisée en rotation par rapport à la tige de direction 14. Dans le mode de réalisation représenté, le deuxième organe de butée 27 se présente sous forme d'une projection, délimitée par des traits discontinus aux figures 2 et 3, qui s'étend vers le bas depuis la portion de surface 26b et le long de la jupe 28.

Le chapeau 24 présente une jupe extérieure 28 qui, dans le mode de réalisation représenté, s'étend longitudinalement vers le bas à partir du pourtour extérieur de la paroi annulaire supérieure 26. La jupe 28 s'étend de préférence sur une hauteur au moins égale à l'espace 30 séparant les parois annulaires inférieure 18 et supérieure 26, de manière à masquer cet espace depuis l'extérieur. La jupe 28 est une paroi métallique rigide, dont le diamètre intérieur est légèrement supérieur au diamètre maximum du tube 12.

La jupe 28, la paroi annulaire inférieure 18, la paroi annulaire supérieure 26 et la tige de direction 14 avec l'entretoise 22, délimitent un espace intérieur 30 de l'ensemble de direction 7. L'espace intérieur 30 a ici la forme d'un anneau de section carrée, en dehors des premier et deuxième organes de butée (19, 27). L'espace intérieur 30 n'est pas nécessairement étanche mais prévient l'introduction de corps étrangers. Plus particulièrement, l'espace intérieur 30 est délimité par la portion de face cylindrique 18b de la paroi annulaire inférieure 18, la portion de surface 26b de la paroi supérieure 26 et la face radialement extérieure de l'entretoise 22 qui forme un même ensemble fonctionnel avec la tige de direction 14 et pourrait être intégralement formée avec celle-ci. On notera que l'espace intérieur 30 n'excède pas la section maximale du tube de direction 12, et ne crée donc pas une protubérance marquée par rapport à ce tube.

L'ensemble de direction 7 comprend un organe élastiquement déformable 32 qui forme un dispositif permettant de générer un couple autour de l'axe de pivotement X, qui rappelle la tige 14 vers la position angulaire neutre de la direction, position neutre qui doit permettre un déplacement du deux-roues sensiblement en ligne droite.

L'organe élastiquement déformable 32 est logé dans l'espace intérieur 30 de l'ensemble de direction 7, et est donc protégé. Il s'agit ici d'une bague qui entoure complètement la tige de direction 14 et est située entre celle-ci et la jupe 28. L'organe élastiquement déformable 32 présente une première portion 33 reliée au tube de direction 12 et une deuxième portion 34 reliée à la tige de direction 14, de sorte qu'elle génère un couple de rappel du fait de sa déformation élastique lorsque la position angulaire de la tige de direction 12 s'écarte de la position neutre.

La bague 32 formant l'organe élastiquement déformable, présente des faces longitudinales supérieure et inférieure (35, 36) sensiblement planes. Celles-ci présentent chacune une échancrure (35a, 36a) de forme exactement complémentaire aux premier et deuxième organes de butée (19, 27). Il n'y a donc pas de jeu entre la bague 32 et les organes de butée, de sorte qu'un léger écart angulaire par rapport à la position neutre entre le tube et la tige de direction (12, 14) entraîne une déformation, et par conséquent un couple de rappel, même faible. Le dispositif de génération de couple réalise donc une fonction de rappel en ligne droite de la direction. Il est possible de prévoir un organe de freinage, comme par exemple une rondelle ondulée entre la cuvette 18 et l'organe élastique 32, pour ralentir le retour vers la position neutre.

Néanmoins, il n'est pas forcément nécessaire de réaliser cette fonction pour éviter les problèmes de chocs lorsque la direction bascule vers une position de braquage maximum. Il est donc parfaitement envisageable de prévoir un jeu angulaire entre l'un et/ou l'autre des organes de butée (19, 27) et le relief correspondant (35a, 36a) de la bague 32. Il est même envisageable de prévoir que l'organe élastiquement déformable présente une forme en C avec une première portion 33 reliée de manière fixe avec le tube de direction 12 et une deuxième portion sous forme d'un espace libre encadrant le deuxième organe de butée pour réaliser une liaison autorisant un débattement de la direction sur une plage angulaire prédéterminée, sans entraîner de déformation de l'organe élastiquement déformable et donc sans créer de couple de rappel sur cette plage centrée sur la position neutre. Une construction avec deux organes élastiques est aussi possible.

Par contre, pour éviter un phénomène de butée en cas de basculement vers les angles de braquage au maximum, il est important de générer un couple de rappel relativement important à l'approche de ces positions angulaires. A cet effet, il s'avère préférable que l'organe élastiquement déformable 32 subisse des contraintes et donc des déformations selon une direction circonférentielle par rapport à l'axe de pivotement X. Ceci est typiquement le cas en réalisant cet organe à la forme de la bague 32 qui subit entre les première et deuxième portions (33,34), d'une part un effort de traction entraînant un allongement sur un côté et, d'autre part, un effort de compression entraînant un rapprochement des première et deuxième portions sur l'autre côté.

La bague 32 est en élastomère. Il n'est pas exclu d'utiliser un organe de génération de couple en métal, par un ressort hélicoïdal dont les extrémités seraient reliées respectivement au tube et à la tige de direction. Le couple de rappel serait alors directement proportionnel à l'angle de pivotement du fait de la raideur en torsion quasi constante sur les plages angulaires utilisées. Mais le fait d'utiliser un élastomère s'avère bien plus efficace pour générer un couple de rappel important à proximité des angles de braquage au maximum sans que la direction du deux-roues présente une raideur importante autour de la position neutre, ce qui pourrait générer une impression désagréable pour certains utilisateurs. Les caractéristiques de raideur d'un matériau élastomère qui suivent des lois non proportionnelles, notamment à la compression, permettent de voir augmenter le couple de rappel de manière supérieure à une loi directement proportionnelle à l'écart angulaire par rapport à la position neutre. Un effet combiné peut être obtenu avec le fait que la bague élastiquement déformable 32 est agencée dans un espace intérieur 30 relativement ajusté. En effet, lorsque la portion comprimée de la bague 32 vient au contact des parois de cet espace, sa résistance à la déformation augmente fortement.

A titre d'exemple, le matériau élastomère, les dimensions géométriques de la bague 32 et de l'espace intérieur 30 sont choisis de manière à générer un couple de rappel d'au moins 5 N/m pour une position située 15 degrés avant l'angle de braquage maximal. Par exemple, de 5 N/m à 8 N/m pour un angle de 30° selon la sensation plus ou moins souple ou dure recherchée. L'angle de braquage maximal correspond à l'angle que peut raisonnablement atteindre un utilisateur sans endommager le vélo. A titre d'indication l'angle de braquage maximal peut être limité à +/- 45° pour un vélo de ville, et le couple de rappel de 7 à 15 N/m quelques degrés avant cet angle.

Une telle valeur du couple de rappel avec un ressort métallique nécessiterait une raideur à la torsion et une précontrainte importantes qui pourraient être ressenties de manière désagréable par l'utilisateur dans des conditions habituelles de circulation. Avec la même bague élastiquement déformable 32, le couple de rappel peut demeurer inférieur à 2 N/m pour un écart de +/- 20 degrés autour de la position neutre. De tels couples de rappel n'affectent pas de manière sensible la conduite du deux-roues, mais permettent tout de même de réaliser une fonction de retour en position neutre qui facilite le maintien du cap sans tenir le guidon. Un couple de rappel à proximité de la position angulaire neutre améliore la sensation de sécurité, et évite une inclinaison importante de la direction en position de stationnement.

Les valeurs indiquées ci-dessus ne sont que des valeurs préférentielles déterminées plus particulièrement pour un adulte circulant en ville. La structure de l'ensemble de direction 7 et du mode de réalisation représenté, permet toutefois d'ajuster facilement ces valeurs en fonction de l'utilisateur ou de l'utilisation.

Comme cela apparaît sur les figures 2 et 3, les première et deuxième portions (33, 35) de l'organe élastiquement déformable 32 sont diamétralement opposées en position neutre. Par conséquent les portions complémentaires de la bague 32 susceptibles de déformation, sont relativement importantes. L'angle de braquage maximum reste relativement important, sans toutefois excéder +/-150 degrés du fait des butées (19, 27). Il n'est toutefois pas exclu de multiplier les portions de liaison si l'angle de braquage peut être nettement inférieur. La disposition diamétralement opposée des portions (33, 34) se combine avec l'utilisation d'une bague en élastomère pour offrir un comportement parfaitement symétrique à droite et à gauche de l'ensemble de direction 7.

Comme on peut le voir à la figure 2, la hauteur de l'espace intérieur 30 entre le sommet des première et deuxième butées et les première et deuxième parois annulaires en regard, correspond sensiblement à la hauteur de la bague dans ces zones, c'est-à-dire les première et deuxième portions (33, 34) de celle-ci. Cette hauteur peut même être un peu inférieure à la hauteur de ces portions (33, 34) de manière à les comprimer légèrement en direction longitudinale. Ceci permet d'éviter tout désengagement des échancrures (33a, 34a) avec les première et deuxième butées (19, 27) et augmentent donc la fiabilité du dispositif de rappel.

En dehors de ces première et deuxième portions, un tel ajustement de la hauteur de l'espace intérieur 30 avec celle de la bague n'est pas nécessaire. Il est même préférable de prévoir un jeu entre les faces longitudinales (35, 36) de la bague et les parois annulaires supérieure et inférieure (26, 18), du moins lorsque la direction est dans la position neutre. Par contre, pour limiter les déformations de la bague en élastomère 32 et augmenter significativement le couple de rappel, il est préférable que les faces longitudinales (35, 36) de la bague viennent au contact des parois annulaires supérieure et inférieure (26, 18) lorsque la direction approche un angle de braquage maximal.

Des dispositions similaires sont également parfaitement applicables à la paroi radialement intérieure de la jupe 28 et la paroi radialement extérieure de l'ensemble de tige de direction, constituée ici par l'entretoise 22. La largeur de l'espace intérieur 30 est alors ajustée par rapport à la largeur de la bague 32, pour créer un contact d'une portion comprimée.

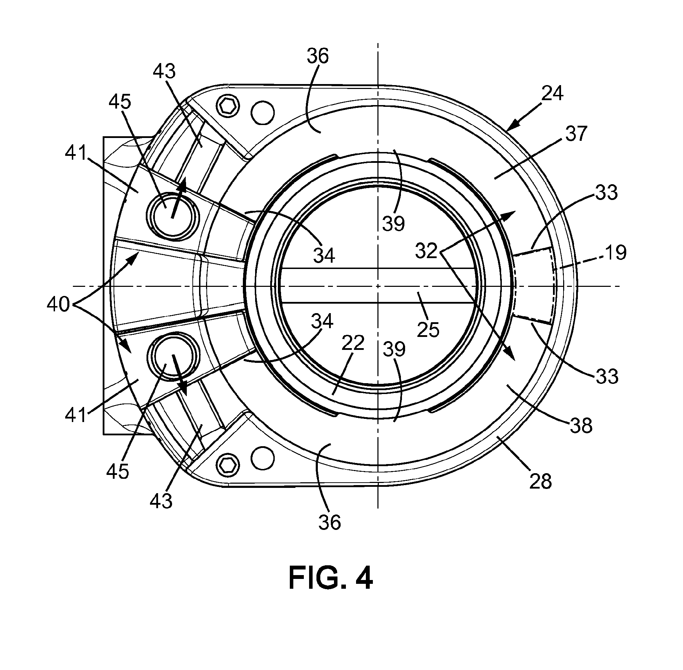

A la figure 4, est représentée une alternative de réalisation dans laquelle l'organe élastiquement déformable 32, l'organe de butée 27 solidaire de la tige de direction 14, ainsi que le chapeau 24 de cette tige sont sensiblement différents, les autres pièces étant identiques, notamment la cuvette 18 et son organe de butée 19 dont la trace est indiquée en traits mixtes.

L'organe élastique 32 est ici formé de deux éléments distincts (37, 38). Ces éléments se présentent sous forme de portion d'arc de cercle à section rectangulaire. A la figure 4 représentant le chapeau 24 quelque peu modifié en vue de dessous, est visible la face longitudinale inférieure 36 de ces éléments (37, 38). Une portion médiane 39 de chacun de ces éléments présente une section plus importante, ici réalisée par une surépaisseur dans la direction radialement intérieure, de sorte que cette portion médiane 39 vient au contact de la jupe extérieure 28 et de l'entretoise 22. Ainsi, les éléments (37, 38) peuvent être retenus dans le chapeau 24 avant d'être assemblés sur le tube de direction 12.

Dans cette variante de réalisation, l'organe de butée 27 solidaire de la tige de direction 14 est remplacé par un système de butée réglable 40.

Tout comme dans le précédent mode de réalisation, les éléments (37, 38) de l'organe élastiquement déformable présentent des première et deuxième portions (33, 34), correspondant ici aux faces d'extrémité circonférentielles, qui coopèrent avec l'organe de butée 19 immobile par rapport au tube de direction 12 et des organes de butée 40 qui sont solidaires avec la tige de direction 14 lors de l'utilisation, mais dont la position peut être ajustée. Ces organes de butée réglables 40 comprennent chacun un taquet 41 monté coulissant sur un arc de cercle du chapeau 24. Une tige filetée présente une tête montée rotative dans le chapeau 24 et une partie filetée qui coopère avec un coulisseau 45 entraînant le taquet correspondant 41.

Ainsi, les éléments élastiques (37, 38) peuvent être placés entre l'organe de butée fixe 19 et les butées réglables 40 dans la position représentée à la figure 4, sans être comprimé circonférentiellement ou en étant faiblement comprimé. Les tiges filetées 43 sont ensuite tournées pour déplacer chaque coulisseau 45 et la butée 41 associée dans le sens des flèches de la figure 4. Les éléments élastiques (37, 38) sont alors comprimés circonférentiellement, ce qui permet d'augmenter le couple de rappel autour de la position neutre, mais aussi d'éviter qu'un jeu apparaisse à l'usage entre les première et deuxième portions (33, 34) et les organes de butée (19, 40), du fait d'un tassement inévitable de l'élastomère.

Bien entendu, d'autres formes de réalisation des organes de butée réglables sont possibles. Il est à noter que l'organe élastiquement déformable en élastomère est avantageusement graissé pour éviter l'apparition de bruits.

Le mode de réalisation décrit ci-dessus, destiné en particulier à un deux-roues de type vélo de ville, n'est nullement limitatif. De nombreuses modifications peuvent être apportées à l'ensemble de direction 7 ou au deux-roues comprenant cet ensemble, sans sortir du cadre de la présente invention définies par les revendications ci-après.

Outre les possibilités déjà indiquées, il est notamment possible de prévoir que la jupe 28 délimitant extérieurement l'espace intérieur 30 ne soit pas solidaire de la tige de direction 14 pour former un ensemble avec ceux-ci, mais qu'elle forme plutôt un ensemble avec le tube de direction 12. Par exemple, la jupe pourrait être sous forme d'une collerette s'étendant vers le haut à partir de la cuvette 18, ou formée par le tube de direction 12 lui-même. La jupe 28 pourrait aussi être un élément indépendant disposé entre les ensembles formant le tube et la tige de direction.

## Revendications

1. Ensemble de direction pour un deux-roues comprenant un cadre (2), un guidon (5) et une fourche (4) portant une roue directrice (3), qui comprend :
- un tube de direction (12) solitaire du cadre et définissant un axe de pivotement (X) ;
- une tige de direction (14) montée pivotante à travers le tube de direction et reliée d'une part au guidon et d'autre part à la fourche ; et
- un dispositif susceptible de générer un couple de rappel vers une position angulaire neutre correspondant a une circulation en ligne droite,
dans lequel le dispositif de génération de couple comprend un organe élastiquement déformable (32) agencé dans un espace (30) intérieur audit ensemble de direction (7) et entourant la tige de direction (14), ledit organe élastique présentant une première portion (33) qui coopère avec le tube de direction (12) et une deuxième portion (34) qui coopère avec la tige de direction (14), de manière à créer un couple de rappel autour de l'axe de pivotement lorsque la tige de direction (14) pivote d'au moins un angle déterminé par rapport à ladite position angulaire neutre, **caractérisé en ce que** l'espace (30) intérieur contenant l'organe élastiquement déformable (32) n'excède pas la section maximale du tube de direction (12).

2. Ensemble de direction selon la revendication précédente, dans lequel l'organe élastiquement déformable (32) est essentiellement en élastomère.

3. Ensemble de direction selon l'une des revendications précédentes, dans lequel l'organe élastiquement déformable (32) est déformé principalement selon une direction circonférentielle par rapport à l'axe de pivotement (X).

4. Ensemble de direction selon l'une des revendications précédentes, dans lequel l'espace intérieur (30) est délimité longitudinalement par une paroi annulaire inférieure (18) et une paroi annulaire supérieure (26) immobilisées longitudinalement sur l'axe de pivotement (X) à proximité de l'organe élastiquement déformable (32).

5. Ensemble de direction selon l'une des revendications précédentes, dans lequel l'espace intérieur (30) est délimité radialement vers l'extérieur par une jupe (28) s'étendant longitudinalement à proximité de l'organe élastiquement déformable (32) sur une hauteur au moins égale à la hauteur dudit espace intérieur.

6. Ensemble de direction selon l'une des revendications précédentes, dans lequel les première et deuxième portions de liaison (33, 34) de l'organe élastiquement déformable (32) sont diamétralement opposées.

7. Ensemble de direction selon l'une des revendications précédentes, dans lequel l'une (34) des première et deuxième portions de l'organe élastiquement déformable (32) coopère avec un organe de butée (40) qui est monté de manière réglable sur l'un (14) desdits tube de direction et tige de direction.

8. Ensemble de direction selon l'une des revendications précédentes, dans lequel l'organe élastiquement déformable (32) se présente sous forme d'une bague ayant des faces longitudinales (35, 36) globalement planes avec des premier et deuxième reliefs (35a, 36a) au niveau des première et deuxième portions de liaison (33, 34), et dans lequel un premier et un deuxième organe de butée (19;27) de forme complémentaire auxdits reliefs sont respectivement solidaires du tube et de la tige de direction (12;14).

9. Ensemble de direction selon l'une des revendications 1 à 7, dans lequel l'organe élastiquement déformable (32) comprend au moins deux éléments élastiques distincts (37, 38) globalement en forme d'arc de cercle et présentant de préférence une portion médiane (39) de section grandie venant en contact avec des parois de l'espace intérieur (30).

10. Ensemble de direction selon l'une des revendications précédentes, dans lequel le couple de rappel généré par l'organe élastiquement déformable (32), est d'au moins 5 N/m pour un écart angulaire inférieur à 15 degrés par rapport à l'angle de braquage maximal.

11. Ensemble de direction selon l'une des revendications précédentes, dans lequel le couple de rappel croît de manière supérieure à une loi directement proportionnelle en fonction de l'écart angulaire de la tige de direction (14) par rapport à la position neutre de la direction.

12. Ensemble de direction selon l'une des revendications précédentes, dans lequel le couple de rappel généré par l'organe élastiquement déformable (32) est inférieur à 2 N/m pour un écart angulaire de 20 degrés par rapport à la position neutre.

13. Vélo comprenant un cadre (2), un guidon (5) et une fourche (4) portant une roue avant directrice (3), **caractérisé en ce qu'**il comprend un ensemble de direction (7) selon l'une quelconque des revendications précédentes.
